# EUROPÄISCHE PATENTANMELDUNG

(11) **EP 1 529 562 A1**
(43) Veröffentlichungstag der Anmeldung: **11.05.2005**
(21) Anmeldenummer: 04026054.9
(22) Anmeldetag: 03.11.2004
(51) Int. Cl.: B01D 53/26, B60T 17/00

(54) **Verfahren zum Reinigen von Druckluft an Druckluftbeschaffungsanlagen von Kraftfahrzeugen sowie Kartusche hierfür**

(30) Priorität: 06.11.2003 DE 10351837
(71) Anmelder: Haldex Brake Products GmbH, 69123 Heidelberg (DE)
(72) Erfinder: Seglö, Fredrik, 69412 Eberbach (DE)
(74) Vertreter: Rehberg Hüppe + Partner

(57) **Zusammenfassung**

Bei einem Verfahren zum Reinigen von Druckluft in Druckluftbeschaffungsanlagen von Kraftfahrzeugen wird die von einem Kompressor herangeführte und insbesondere mit Öl und Wasser beladene Druckluft durch eine mit mindestens zwei in Strömungsrichtung hintereinander angeordneten Behandlungsmitteln gefüllte Abscheidezone geführt. Die zu reinigende Druckluft wird zunächst durch ein Trockenmittel als vorangehendes Behandlungsmittel geführt und dabei im Wesentlichen Feuchtigkeit abgeschieden. Erst danach wird die zu reinigende Druckluft durch Aktivkohle und/oder Aktivaluminium als nachfolgendes Behandlungsmittel geführt und dabei im Wesentlichen Öl-Nebel abgeschieden. Eine austauschbare Kartusche zum Reinigen von Druckluft in Druckluftbeschaffungsanlagen von Kraftfahrzeugen ist mit einem einen Schraubanschluss (7) und mindestens eine Dichtung (10) aufweisenden Gehäuse (3) versehen, in welchem ein mindestens ein mit einem Behandlungsmittel gefüllter Abscheideraum (21) vorgesehen ist. In einem oder mehreren Abscheideräumen (21; 33, 34) ist in Strömungsrichtung der Druckluft zunächst ein Trockenmittel zum Abscheiden von Feuchtigkeit und erst nachfolgend eine Aktivkohle und/oder Aktivaluminium enthaltende Schicht (28) als Behandlungsmittel zum Abscheiden von Öl-Nebel vorgesehen.

## Beschreibung

Die Erfindung bezieht sich auf ein Verfahren zum Reinigen von Druckluft an Druckluftbeschaffungsanlagen von Kraftfahrzeugen mit den Schritten und Merkmalen der Oberbegriffe der Ansprüche 1 und 4.

Bekanntlich wird auf Kraftfahrzeugen, insbesondere Nutzfahrzeugen, Druckluft zum Steuern und Betätigen verschiedener Anlageteile, insbesondere Ventile, Bremszylinder und dergleichen, benötigt. Diese Druckluft wird von einem Kompressor geliefert, der Umgebungsluft ansaugt, auf ein entsprechendes Druckniveau verdichtet, so dass die komprimierte Druckluft auf verschiedene Leitungen und Behälter von einzelnen Kreisen aufgeteilt und dort gespeichert wird. Bekanntlich werden auf diese Art und Weise als die wichtigsten Kreise zwei Betriebsbremskreise geschaffen. Der abwechselnd in Lastlaufphase sowie in Leerlaufphase betriebene Kompressor liefert an einer Druckluftaufbereitungseinrichtung Druckluft, die insbesondere mit Öl, Verkokungsrückständen, Verschleißpartikeln und dgl. belastet ist. Zudem enthält die angesaugte Druckluft auch immer Feuchtigkeit, die auf diese Weise in die Anlage gelangt. Die Verunreinigungen in der Druckluft führen zu einer Beeinträchtigung der Zuverlässigkeit der nachgeschalteten Elemente, insbesondere Ventile. Sie können bei engen Strömungsquerschnitten an Ventilen und anderen singulären Anlagenteilen zu einem Zusetzen führen. Die miteingeschleppte Feuchtigkeit kann insbesondere während der kalten Jahreszeit kondensieren und einfrieren und auf diese Weise die Funktionsfähigkeit nachgeschalteter Elemente beeinträchtigen.

### STAND DER TECHNIK

Ein Verfahren der eingangs beschriebenen Art ist aus der PCT-Anmeldung mit der Veröffentlichungsnummer WO 01/26783 bekannt. Die von einem Kompressor herangeführte und insbesondere mit Öl und Wasser beladene Druckluft wird dadurch gereinigt, dass sie zunächst durch ein Vorfilter, dann durch zwei Schichten Silikagel, weiter durch ein Molekularsieb und schließlich durch einen Feinfilter geführt wird. Das Vorfilter hat die Aufgabe, größere feste Partikel, Wasserpartikel sowie Flüssigkeiten und Substanzen aufzufangen und an dem weiteren Durchtritt zu hindern. Dieses Vorfilter besitzt eine gute Wirkung bezüglich größerer Partikel, beispielsweise größer als 5 µm, hat andererseits eine geringere Wirkung für kleinere Partikel. In einer so aufgebauten Abscheidezone sind also grobporiges Silikagel und feinporiges Silikagel in zwei Schichten in Strömungsrichtung hintereinander angeordnet. Das grobporige Silikagel hat die Aufgabe, längere Kohlenstoffverbindungen und andere chemische Komponenten abzufangen. Es dient auch zur Aufnahme von Wasser in flüssiger Form. Das feinporige Silikagel nimmt kleinere Kohlenstoffverbindungen und Wasser in Dampfform auf. Diese beiden Arten von Silikagel sind in einem gemeinsamen Abscheideraum angeordnet, wobei die Durchflussrichtung der zu reinigenden Druckluft entgegen der Schwerkraftrichtung gerichtet ist. Es schließt sich ein weiterer Abscheideraum an, in welchem ein Molekularsieb als weiteres Behandlungsmittel angeordnet ist. Schließlich gelangt die Druckluft noch über einen Feinfilter, der geeignet ist, kleinere Partikel aufzunehmen und abzuscheiden. Die Vielzahl der in einer Abscheidezone zusammengefassten Abscheideräume mit den einzelnen Behandlungsmitteln sind hintereinander geschaltet in einer Kartusche untergebracht, die austauschbar mit einem Basisteil verbindbar ist. Trotz der Anordnung der Mehrzahl von einzelnen Behandlungsschichten ist die Abscheidewirkung für Öl-Nebel nicht optimal. Solche Öl-Nebel beeinträchtigen die zuverlässige Wirkung nachgeschalteter Ventile in der Anlage.

Aus der US 5,427,609 ist eine Vorrichtung zum Abscheiden von Verunreinigungen in Druckluft an Kraftfahrzeugen bekannt. Es wird ein Lufttrockner eingesetzt, der einen Abscheideraum aufweist, in welchem im Wesentlichen ein Trockenmittel in Form eines Granulates untergebracht ist. In Form eines rechtwinklig dazu angeordneten Rohres ist ein Sammeloder Abscheidefilter vorgeschaltet, der die Wirkung hat, kleinere Partikel zu größeren Partikeln zusammenzufügen, die dann der Schwerkrafteinwirkung unterliegen können und über ein Ablassventil aus dem Strömungsweg der Druckluft herausgeführt werden können. Zwischen diesem Filter und dem mit dem Trockenmittel gefüllten Abscheideraum sind zusätzlich Matten angeordnet, von denen die erste Matte mit Aktivkohle und die zweite Matte mit Aktivaluminium imprägniert sind. Aktivkohle besitzt eine große Affinität zu größeren Ölmolekühlen, während aktives Aluminium eine Aktivität zu kleineren Ölmolekülen aufweist. Die Matten bestehen in bevorzugter Ausführungsform aus einem gewebten Kunststoffmaterial. Diese Matten sind deshalb eingeschaltet, um Öl in Aerosolform aus dem Strömungspfad der Druckluft herauszunehmen und damit das nachgeschaltete Trockenmittel von solchen Verunreinigungen sauber zu halten, so dass es seine Wirkung optimal erfüllen kann. Die mit Aktivkohle bzw. Aktivaluminium imprägnierten Matten verhindern also den Durchtritt von Öl zu dem nachgeschalteten Trockenmittel. Gleichwohl ist die Abreinigung des in der Druckluft mitgeführten Öls sowie anderer Rückstände nur bedingt wirksam. Insbesondere feine Öl-Nebel können mit dieser Anordnung nicht abgeschieden werden, so dass sie nach wie vor die Zuverlässigkeit und Langlebigkeit nachgeschalteter Ventile sowie anderer singulärer Anlagenteile beeinträchtigen.

Aus der EP 1 048 540 A1 ist eine austauschbare Kartusche zum Reinigen von Druckluftbeschaffungsanlagen von Kraftfahrzeugen bekannt. Die Kartusche besitzt ein Gehäuse, an welchem ein Schraubanschluss und eine Dichtung verwirklicht sind. Schraubanschluss und Dichtung dienen dazu, die austauschbare Kartusche auf ein Basisteil dichtend aufzuschrauben, so dass die Kartusche als Einheit leicht ausgetauscht werden kann. Der Innenraum des Gehäuses ist durch eine Vielzahl von Wandungen in eine Vielzahl von Abscheideräumen unterteilt, die jeweils mit einem Behandlungsmittel gefüllt sind. Diese auf diese Art und Weise hintereinandergeschalteten mehreren Arbeitsräume einer gemeinsamen Abscheidezone dienen dazu, längere Wege für die zu reinigende Druckluft zu schaffen und zur Verfügung zu stellen und damit die Kontakt- und Verweilzeit der Druckluft in der Kartusche zu erhöhen. Sämtliche Abscheideräume sind mit dem gleichen Trocknungsmittel in Form eines Granulates gefüllt. Die so geschaffene Abscheidezone dient der Abscheidung von öl- und wasserhaltigen Verunreinigungen in der Druckluft. Trotz der geschaffenen langen Wege für die Druckluft und der damit erhöhten Kontakt- und Verweilzeit ist auch hier die Abscheidewirkung gegen feine Öl-Nebel nur begrenzt, so dass die Zuverlässigkeit und Sicherheit nachgeschalteter singulärer Anlagenteile beeinträchtigt ist.

### AUFGABE DER ERFINDUNG

Der Erfindung liegt die Aufgabe zugrunde, ein Verfahren der eingangs beschriebenen Art sowie eine zur Durchführung des Verfahrens geeignete austauschbare Kartusche zu schaffen, mit denen der Weitertransport von insbesondere feinen ÜI-Nebeln in die Anlage und zu den dort angeordneten Ventilen und sonstigen Elementen reduziert werden kann.

### LÖSUNG

Erfindungsgemäß wird dies durch die Merkmale der unabhängigen Ansprüche 1 und 4 erreicht.

### BESCHREIBUNG DER ERFINDUNG

Für das erfindungsgemäße Verfahren ist es von Bedeutung, dass die zu reinigende Druckluft zunächst durch eine Schicht grobporiges Silikagel und dann eine Schicht feinporiges Silikagel als erste oder vorangehende Behandlungsmittel geführt und dabei im Wesentlichen Feuchtigkeit abgeschieden wird. Es wird damit darauf verzichtet, Feuchtigkeit erst dann abzuscheiden, wenn vorher wesentliche ölhaltige Bestandteile abgeführt sind. Die Erfindung nimmt in Kauf, dass sich auch ein Teil der ölhaltigen Bestandteile an dem Trockenmittel niederschlagen. Dabei wird die Wirksamkeit des Trockenmittels erstaunlicherweise jedoch nur vergleichsweise wenig beeinträchtigt. Die zu reinigende Druckluft wird erst danach durch eine Aktivkohle und/oder Aktivaluminium enthaltende Schicht als weiteres Behandlungsmittel geführt. Dabei werden im Wesentlichen Öl-Nebel abgeschieden, auch sehr feine Öl-Nebel, die bisher nicht abgeschieden werden konnten. Möglicherweise ist dies darauf zurückzuführen, dass die Abscheidung von Öl-Nebeln dann besser und wirksamer möglich ist, wenn zuvor die Feuchtigkeit abgeschieden worden ist. Es ist damit nicht unbedingt erforderlich, wie bisher angenommen, dass zuerst die ölhaltigen Bestandteile und erst anschließend die Feuchtigkeit abzuscheiden ist. Gerade bezüglich der Abscheidung feiner Öl-Nebel ist es vorteilhaft, sich gegen die im Stand der Technik propagierte Linie zu entscheiden. Die Behandlung der zu reinigenden Druckluft kann in einem gemeinsamen Arbeitsraum durchgeführt werden, in welchem die mindestens drei Behandlungsmittel zwar schichtweise aufgebaut, aber durch keinerlei Trennwände voneinander getrennt angeordnet sind. Es ist aber andererseits auch möglich, mehrere mehr oder weniger getrennte Arbeitsräume hintereinander zu schalten und das eine bzw. das andere Behandlungsmittel dann in je einem dieser Abscheideräume in der beschriebenen Strömungsrichtung anzuordnen.

Es ist auch möglich, die zu reinigende Druckluft zusätzlich zunächst durch ein Gewebefilter zu führen und dabei im Wesentlichen größere Öl- und Kohlepartikel abzuscheiden. Das Gewebefilter kann auch so ausgebildet sein, dass es eine Verklumpungs- und Sammelwirkung ausübt, also kleinere Partikel zu größeren Partikeln zusammenfügt, die dann leichter, z. B. durch Schwerkrafteinwirkung, abgeschieden werden können. Auf feinere Öl-Nebel hat dagegen dieses Vorfilter nur einen bedingten Einfluss.

Die zu reinigende Druckluft kann in Schwerkraftrichtung durch den die mindestens drei Behandlungsmittel aufweisenden Abscheideraum bzw. Abscheidezone geführt werden. Die Schwerkraftrichtung beeinträchtigt die Funktionsfähigkeit nicht.

Es ist auch möglich, die Anzahl der Schichten in einem gemeinsamen oder in getrennten Abscheideräumen zu erhöhen. So ist es durchaus möglich, die zu reinigende Druckluft durch einen gemeinsamen Abscheideraum zu führen, in dem hintereinander in Strömungsrichtung ein grobporiges Silikagel, ein feinporiges Silikagel oder ein Molekularsieb und eine Schicht aus Aktivkohle und/oder Aktivaluminium angeordnet sind.

Obwohl das erfindungsgemäße Verfahren nicht von der Anwendung in einer austauschbaren Kartusche abhängig ist, bietet dennoch eine austauschbare Kartusche eine sinnvolle Möglichkeit zum Reinigen von Druckluft an Druckluftbeschaffungsanlagen von Kraftfahrzeugen. Eine solche austauschbare Kartusche weist, wie bekannt, einen Schraubanschluss und mindestens eine Dichtung an einem Gehäuse auf und ist als austauschbares Teil mit einem Basisteil verbindbar, indem eine Schraubverbindung durchgeführt wird. Das Gehäuse der Kartusche besitzt mindestens einen mit Behandlungsmitteln gefüllten Abscheideraum, oft aber auch mehrere Abscheideräume hintereinander. Erfindungsgemäß ist in einem oder mehreren Abscheideräumen in Strömungsrichtung der Druckluft zunächst eine das grobporige Silikagel und das feinporige Silikagel als Trockenmittel zum Abscheiden von Feuchtigkeit enthaltende Schicht und erst nachfolgend eine Aktivkohle und/oder Aktivaluminium enthaltende Schicht als Behandlungsmittel zum Abscheiden von Öl-Nebel vorgesehen. Diese an sich in Strömungsrichtung ungewöhnliche Reihenfolge zeigt hervorragende Ergebnisse hinsichtlich der Abscheidung feiner Öl-Nebel. Feuchtigkeitsfreie Öl-Nebel werden von einer Schicht aus Aktivkohle und/oder Aktivaluminium besser und verlässlicher aufgenommen als wasserhaltige Öl-Nebel.

Die drei in Rede stehenden Behandlungsmittel können in separaten aneinander angeschlossenen Abscheideräumen untergebracht sein. Eine andere Möglichkeit besteht darin, dieses schichtweise in einem gemeinsamen Abscheideraum unterzubringen bzw. anzuordnen. Die Anzahl der Behandlungsmittel ist dabei mindestens drei. Aber auch die Einfügung oder Hinzufügung weiterer Abscheidemittel in einem gemeinsamen oder in getrennten Abscheideräumen ist nicht nachteilig. Wichtig ist nur, dass die die Aktivkohle und/oder das Aktivaluminium enthaltende oder aufweisende Schicht in Strömungsrichtung dem Trockenmittel nachgeordnet ist. Es verbessert die Wirkung der Abscheidung insgesamt, wenn der Abscheidezone ein Gewebefilter zum Abscheiden größerer Öl- und Kohlepartikel vorgeschaltet ist. Es ist auch möglich, in einem gemeinsamen Abscheideraum in Strömungsrichtung nacheinander eine erste Schicht aus grobporigem Silikagel, insbesondere zum Abscheiden größerer Öl/Kohle-Partikel, eine zweite Schicht aus feinporigem Silikagel, insbesondere zum Abscheiden feinerer Öl/Kohle-Partikel und zum Entfeuchten von nasser Luft, oder eine zweite Schicht aus einem Molekularsieb, und eine dritte Schicht aus Aktivkohle oder mit Aktivaluminium vorzusehen, die der Abscheidung feiner Öl-Nebel dient.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine erste Ausführungsform einer Kartusche in Ansicht und Halbschnitt.
- **Fig. 2**: zeigt eine zweite Ausführungsform einer Kartusche in Ansicht und Halbschnitt.

### FIGURENBESCHREIBUNG

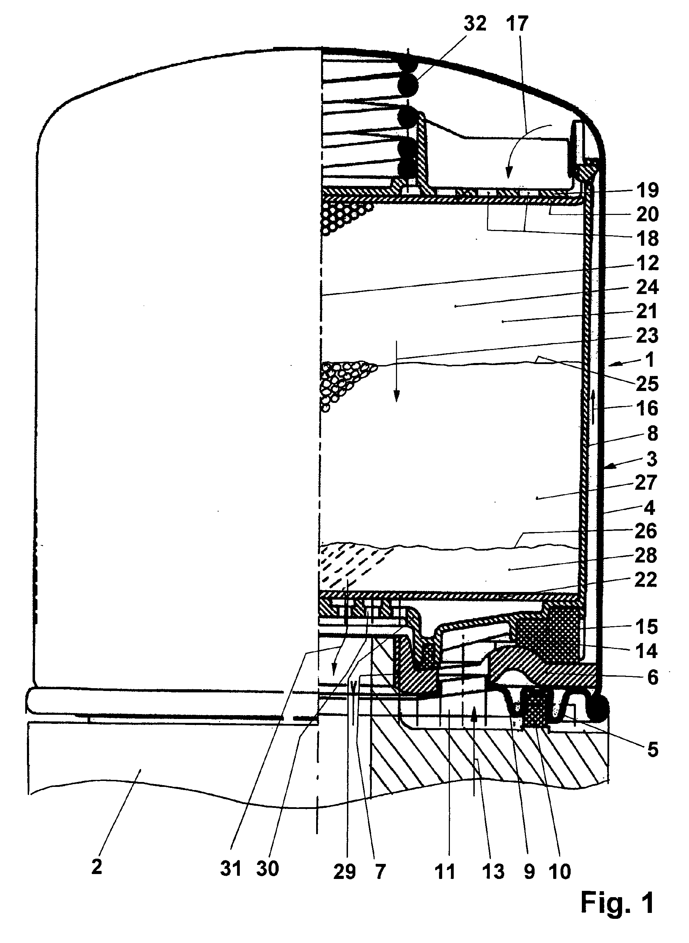

**Fig. 1** zeigt eine Kartusche 1, die als austauschbares Teil mit einem Basisteil 2 zusammengefügt wird. Die Kartusche 1 weist ein Gehäuse 3 auf, welches aus mehreren Elementen zusammengesetzt ist. Das Gehäuse 3 besitzt eine aus mehreren Blechteilen 4, 5 durch Rollen verbundenes Außengehäuse, in dem ein Anschlussdeckel 6 mit Schraubanschluss 7 und eine im Wesentlichen zylindrische Innenwandung 8, die zu einer Stirnwand 9 verlängert ist, untergebracht sind. In dem Blechteil 5 ist eine Dichtung 10 gelagert, die mit einer entsprechenden Gegenfläche an dem Basisteil 2 zusammenarbeitet, wenn die Kartusche 1 mit Hilfe ihres Schraubanschlusses 7 auf das Basisteil 2 aufgeschraubt ist. Der Anschlussdeckel 6 weist Durchbrechungen 11 auf, die über dem Umfang verteilt angeordnet sind. Die Kartusche 1 ist im Wesentlichen rotationssymmetrisch zu einer Mittelachse 12 ausgebildet. Die Einströmung der zu reinigenden Druckluft erfolgt gemäß Pfeil 13 durch die Durchbrechungen 11 im Blechteil 5 sowie im Anschlussdeckel 6 hindurch. Die Druckluft gelangt damit zunächst in einen ersten Abscheideraum 14, in dem ein ringförmiger Gewebefilter 15 untergebracht ist. Der Gewebefilter 15 dient dem Abscheiden größerer Partikel an Ölkohle, Öl und dergleichen. Er kann auch so beschaffen und angeordnet sein, dass er kleinere Partikel zu größeren Einheiten zusammenfügt. Die Druckluft strömt dann durch einen relativ eng begrenzten Ringraum zwischen dem Blechteil 4 und der Innenwandung 8 gemäß Pfeil 16 aufwärts und kehrt im oberen Teil des Gehäuses 3 gemäß Pfeil 17 seine Strömungsrichtung um. Die Druckluft gelangt über Durchbrechungen 18 in einem Deckelteil 19 sowie eine Feinfiltermatte 20 in einen weiteren Abscheideraum 21, der relativ großquerschnittig ausgebildet ist und sich über weite Bereiche der Höhe der Kartusche 1 erstreckt. Unten ist eine weitere Feinfiltermatte 22 angeordnet, die den Abscheideraum 21 begrenzt. In dem Abscheideraum 21 sind in Schwerkrafteinwirkrichtung 23 zunächst eine Schicht 24 aus grobporigem Silikagel untergebracht, die nur teilweise dargestellt ist. Die Schicht 24 erstreckt sich bis zu einer Schichtlinie 25. Zwischen der Schichtlinie 25 und einer Schichtlinie 26 ist eine Schicht 27 aus feinporigem Silikagel untergebracht, welches auch nur teilweise angedeutet ist. Statt der Schicht 27 kann auch ein Molekularsieb vorgesehen sein. Zwischen der Schichtlinie 26 und der Feinfiltermatte 22 befindet sich schließlich eine Schicht 28 aus Aktivkohle oder Aktivaluminium. Die Schicht 28 kann auch Bestandteile beider genannter Mittel enthalten. Unterhalb der Feinfiltermatte 22 erstreckt sich eine Stirnwandung 29, die einteilig mit der Innenwandung 8 ausgebildet sein kann. Auch diese Stirnwandung besitzt Durchbrechungen 30, durch die die gereinigte Druckluft gemäß Pfeil 31 in das Basisteil 2 zurückströmt und auf diese Weise zu einem zentralen Belüftungsraum einer Druckluftbeschaffungsanlage mit Druckregler, Auslassventil, Mehrkreisschutzventil usw. gelangt. Die Abscheideräume 14 und 21 bilden eine gemeinsame Abscheidezone, durch die die zu reinigende Druckluft in der beschriebenen Weise hindurchgeführt wird. Die Schicht 24 aus grobporigem Silikagel und die Schicht 27 aus feinporigem Silikagel dienen im Wesentlichen der Abscheidung von Feuchtigkeit, so dass die Druckluft in weitgehend getrocknetem Zustand schließlich durch die Schicht 28 aus Aktivkohle und/oder Aktivaluminium strömt, wobei hier insbesondere feine Öl-Nebel aufgefangen und abgeschieden werden. Es versteht sich, dass die Kartusche 1 während der Regerationsphase in umgekehrter Richtung durchströmt wird.

Der Deckelteil 19 wird mit Hilfe einer Feder 32 angedrückt, so dass sich die Schichten 24, 27, 28 während der Durchleitung der zu reinigenden Druckluft in Ruhe befinden. Um dennoch das Mitführen von feinen Partikeln aus dem Silikagel zu verhindern, sind die Schichten in dem gemeinsamen Abscheideraum 21 von den Feinfiltermatten 20 und 22 eingeschlossen.

Die Schichten 24 und 27 enthalten das Silikagel als Trockenmittel zum Abscheiden der Feuchtigkeit. Die Schicht 28 aus Aktivkohle und/oder Aktivaluminium ist der Behandlungsschicht zum Abscheiden von Feuchtigkeit immer in Strömungsrichtung nachgeordnet.

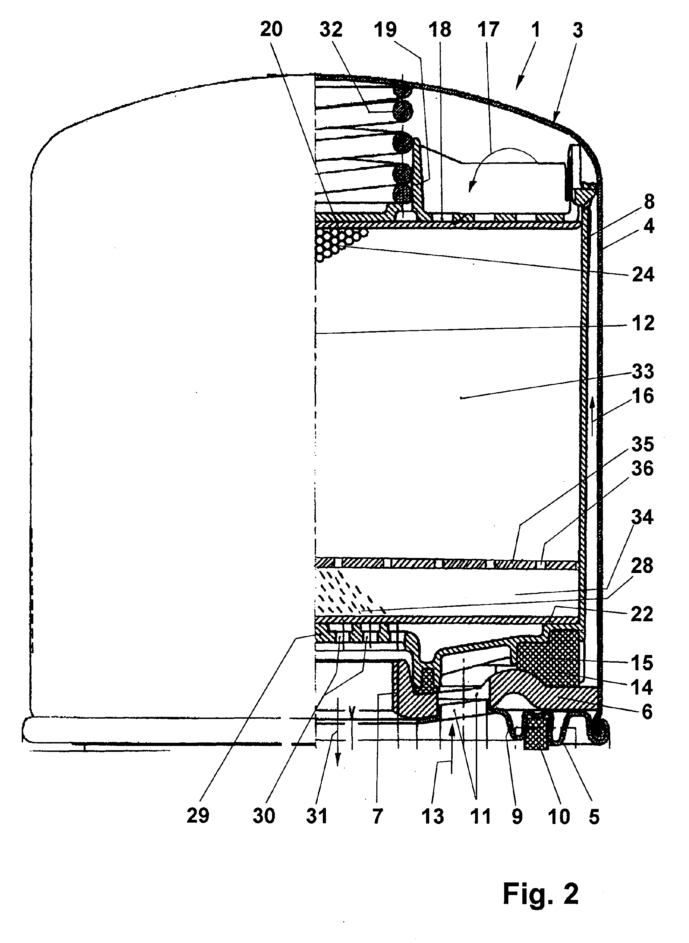

**Fig. 2** zeigt eine zweite Ausführungsform einer austauschbaren Kartusche 1, die in weiten Bereichen ähnlich zu der Ausführungsform der Fig. 1 ausgebildet ist. Somit kann auf die dortige Beschreibung verwiesen werden. Statt eines gemeinsamen durchgehenden Abscheideraums 21 sind hier jedoch zwei Abscheideräume 33 und 34 gebildet, die durch eine durchbrochene Trennwand 35 mit Öffnungen 36 gebildet sind. Der obere Abscheideraum 33 ist mit Schichten aus Silikagel gefüllt, während in dem unteren Abscheideraum 34 die Schicht 28 aus Aktivkohle und/oder Aktivaluminium angeordnet ist. Auch hierbei ist diese Anordnung der Gewebefilter 15 vorgeschaltet. Die Abscheideräume 14, 33 und 34 bilden hier eine Abscheidezone. Es sei abschließend darauf hingewiesen, dass der schichtweise Aufbau bzw. die Anordnung der Schichten in der beschriebenen Reihenfolge auch in jeder anderen konstruktiv ausgebildeten Kartusche erfolgen kann. Wichtig ist nur, dass die angegebene Reihenfolge in Durchströmrichtung eingehalten wird.

### BEZUGSZEICHENLISTE

- 1: Kartusche
- 2: Basisteil
- 3: Gehäuse
- 4: Blechteil
- 5: Blechteil
- 6: Anschlussdeckel
- 7: Schraubanschluss
- 8: Innenwandung
- 9: Stirnwand
- 10: Dichtung
- 11: Durchbrechung
- 12: Mittelachse
- 13: Pfeil
- 14: Abscheideraum
- 15: Gewebefilter
- 16: Pfeil
- 17: Pfeil
- 18: Durchbrechung
- 19: Deckelteil
- 20: Feinfiltermatte
- 21: Abscheideraum
- 22: Feinfiltermatte
- 23: Schwerkrafteinwirkrichtung
- 24: Schicht grobporiges Silikagel
- 25: Schichtlinie
- 26: Schichtlinie
- 27: Schicht feinporiges Silikagel
- 28: Schicht Aktivmaterial
- 29: Stirnwandung
- 30: Durchbrechung
- 31: Pfeil
- 32: Feder
- 33: Abscheideraum
- 34: Abscheideraum
- 35: Trennwand
- 36: Öffnung

## Patentansprüche

1. Verfahren zum Reinigen von Druckluft in Druckluftbeschaffungsanlagen von Kraftfahrzeugen, indem die von einem Kompressor herangeführte und insbesondere mit Öl und Wasser beladene Druckluft durch eine Abscheidezone geführt wird, die mindestens zwei in Strömungsrichtung hintereinander angeordnete mit unterschiedlichen Behandlungsmitteln gefüllte Abscheideräume (21; 33, 34) aufweist, die in Strömungsrichtung eine Schicht grobporiges Silikagel (24), eine Schicht feinporiges Silikagel (27) und ein weiteres Behandlungsmittel enthalten, wobei die zu reinigende Druckluft zunächst durch den das grobporige Silikagel (24) und das feinporige Silikagel (27) als Trockenmittel enthaltenden Abscheideraum geführt und dabei im wesentlichen Feuchtigkeit abgeschieden wird, **dadurch gekennzeichnet, dass** die zu reinigende Druckluft erst danach durch Aktivkohle und/oder Aktivaluminium als nachfolgendes Behandlungsmittel geführt und dabei im Wesentlichen Öl-Nebel abgeschieden wird.

2. Verfahren nach Anspruch 1, **dadurch gekennzeichnet, dass** die zu reinigende Druckluft zunächst durch ein Gewebefilter (15) geführt wird und dabei im Wesentlichen größere Öl- und Kohlepartikel abgeschieden werden, bevor die Druckluft durch den die mindestens drei Behandlungsmittel enthaltenden Abscheideraum (21; 33, 34) geführt wird.

3. Verfahren nach Anspruch 1 oder 2, **dadurch gekennzeichnet, dass** die zu reinigende Druckluft in Schwerkrafteinwirkrichtung (23) durch den die mindestens drei Behandlungsmittel enthaltenden Abscheideraum (21; 33, 34) geführt wird.

4. Austauschbare Kartusche zum Reinigen von Druckluft in Druckluftbeschaffungsanlagen von Kraftfahrzeugen, mit einem einen Schraubanschluss (7) und mindestens eine Dichtung (10) aufweisenden Gehäuse (3), in welchem eine Abscheidezone vorgesehen ist, die mindestens zwei mit unterschiedlichen Behandlungsmitteln gefüllte Abscheideräume (21; 33, 34) aufweist, die in Strömungsrichtung eine Schicht grobporiges Silikagel (24), eine Schicht feinporiges Silikagel (27) und ein weiteres Behandlungsmittel enthalten, insbesondere nach einem der Ansprüche 1 bis 3, **dadurch gekennzeichnet, dass** in einem oder mehreren Abscheideräumen (21; 33, 34) in Strömungsrichtung der Druckluft zunächst eine das grobporige Silikagel (24) und das feinporige Silikagel (27) als Trockenmittel zum Abscheiden von Feuchtigkeit enthaltende Schicht und erst nachfolgend eine Aktivkohle und/oder Aktivaluminium enthaltende Schicht (28) als Behandlungsmittel zum Abscheiden von Öl-Nebel vorgesehen sind.

5. Kartusche nach Anspruch 4, **dadurch gekennzeichnet, dass** die mindestens drei Behandlungsmittel in separaten aneinander angeschlossenen Abscheideräumen (33, 34) untergebracht sind.

6. Kartusche nach Anspruch 4, **dadurch gekennzeichnet, dass** die mindestens drei Behandlungsmittel schichtweise in einem gemeinsamen Abscheideraum (21) untergebracht sind.

7. Kartusche nach mindestens einem der Ansprüche 4 bis 6, **dadurch gekennzeichnet, dass** dem oder den Abscheideräumen (21; 33, 34) ein Gewebefilter (15) zum Abscheiden größerer Öl- und Kohlepartikel vorgeschaltet ist.

8. Kartusche nach mindestens einem der Ansprüche 4 bis 7, **dadurch gekennzeichnet, dass** die Folge der drei Schichten in Schwerkrafteinwirkrichtung (23) angeordnet ist.
